# EUROPÄISCHE PATENTSCHRIFT

(11) **EP 1 093 966 B1**
(45) Veröffentlichungstag und Bekanntmachung des Hinweises auf die Patenterteilung: **27.08.2008**
(21) Anmeldenummer: 00118928.1
(22) Anmeldetag: 01.09.2000
(51) Int. Cl.: B60Q 1/14

(54) **Verfahren und Vorrichtung zur Steuerung der Lichtverteilung einer Scheinwerferanordnung eines Fahrzeuges**
Process and device for controlling the light distribution of a vehicle headlamp
Procédé et dispositif de commande de la distribution de lumière d'un phare de véhicule

(30) Priorität: 20.10.1999 DE 19950504
(43) Veröffentlichungstag der Anmeldung: 25.04.2001
(73) Patentinhaber: Dr. Ing. h.c. F. Porsche Aktiengesellschaft, 70435 Stuttgart (DE)
(72) Erfinder: Eberhardt, Stefan, 71522 Backnang (DE)

(56) Entgegenhaltungen:
- DE-A1- 3 436 391
- DE-A1- 3 844 364

## Beschreibung

Die Erfindung betrifft ein Verfahren und eine Vorrichtung zur Steuerung der Lichtverteilung einer Scheinwerferanordnung eines Fahrzeuges nach dem Oberbegriff des Patentanspruches 1 bzw. 7.

Bei einem gattungsgemäßen Verfahren zur Steuerung der Lichtverteilung einer Scheinwerferanordnung nach der DE 38 44 364 C2 gemäß dem Oberbegriff des Anspruchs 1 wird zur Vermeidung einer Minderung der Sehleistung des Fahrers eines Fahrzeuges bei entgegenkommendem Verkehr die eigene Fahrbahnseite mit einem erhöhten Lichtpegel ausgeleuchtet. Hierzu erfaßt ein Lichtsensor verschiedene Bereiche eines Sichtfeldes des Fahrers und der Lichtpegel zur Ausleuchtung der eigenen Fahrbahn wird erhöht, wenn ein Schwellwert für die Lichtemissionen aus dem Bereich der Gegenfahrbahn überschritten wird. Wird hierbei jedoch ein Schwellwert für die Lichtemissionen aus dem Bereich der eigenen Fahrbahn oder ein Schwellwert für die Lichtemissionen in einem oberhalb der Fahrbahnen liegenden Bereich unterschritten, so wird der Lichtpegel wieder reduziert. Zur Erhöhung des Lichtpegels ist zusätzlich zum Abblendlicht ein weiterer Scheinwerfer vorgesehen, der in der zuvor beschriebenen Weise zugeschaltet werden kann. Alternativ ist in einem vorhandenen Scheinwerfer eine bewegbare Blende vorgesehen, mit der die Lichtverteilung geändert werden kann. Anstelle der bewegbare Blende kann auch die Lichtquelle verschoben werden, so daß sich die Lage des Punktes höchster Lichtintensität verschiebt.

Gegenüber diesem Stand der Technik ist es Aufgabe der Erfindung, ein verbessertes Verfahren und eine verbesserte Vorrichtung zur Steuerung der Lichtverteilung einer Scheinwerferanordnung eines Fahrzeuges zu schaffen.

Erfindungsgemäß wird diese Aufgabe verfahrensgemäß mit den Merkmalen des Patentanspruches 1 sowie vorrichtungsgemäß mit den Merkmalen des Patentanspruches 7 gelöst. Es wird vorgeschlagen, für die Lichtverteilung im Sinne eines Erhöhens der Ausleuchtung des Fahrbahnrandes der eigenen Fahrbahnseite eine Ausschaltverzögerung vorzusehen. Durch diese Maßnahme wird die im Bereich des eigenen Fahrbahnrandes erhöhte Lichtstärke nicht schlagartig, sondern allmählich zurückgenommen. Hiermit wird in vorteilhafter Weise vermieden, daß sich für den Fahrer, dessen Augen sich während der erhöhten Ausleuchtung an den größeren Lichtstrom gewohnt hatten, nach dem Passieren des Gegenverkehres durch eine plötzliche Rücknahme der erhöhten Ausleuchtung im Bereich des eigenen Fahrbahnrandes ein dunkles Loch entsteht. Zusätzlich wird - bei mäßig dichtem Gegenverkehr - die Zahl der für den Fahrer erkennbaren Schaltvorgänge reduziert.

Vorteilhafte Weiterbildungen der Erfindung sind in den Unteransprüchen beschrieben.

So wird vorgeschlagen, die Ausschaltverzögerung mit einer Verzögerung von ca. 2 bis 10 Sekunden durchzuführen. Diese Maßnahme beruht auf der Erkenntnis, daß diese Zeit ausreichend ist, damit sich das Auge des Fahrers an die Verminderung der Ausleuchtung gewöhnen kann. Wird hierbei der obere Grenzwert gewählt, so ist die Verminderung der Ausleuchtung für den Fahrer kaum noch wahrnehmbar. Eine weitere Erhöhung der Verzögerungszeit führt dann zu keiner weiteren Verbesserung der Adaption.

Weiterhin wird vorgeschlagen, zusätzlich zur Ausschaltverzögerung auch eine Einschaltverzögerung vorzusehen. Diese sollte dann vorzugsweise eine Verzögerungszeit von maximal 2 Sekunden aufweisen. Durch diese Maßnahme wirkt das Einschalten des Zusatzlichtes auf den Fahrer weniger irritierend. Andererseits ist zu beachten, daß ein merkliches Einschalten wünschenswert ist, um den Blick des Fahrers auf den rechten Fahrbahnrand zu lenken.

Vor der Ausschaltverzögerung kann zusätzlich eine Totzeit von bis zu 3 Sekunden vorgesehen sein, um diejenige Zeitspanne zu kompensieren, die zwischen dem Zeitpunkt, in dem das entgegenkommende Fahrzeug den Erfassungbereich des Lichtsensors verläßt, und dem Zeitpunkt, in dem das entgegenkommende Fahrzeug den Sichtbereich des Fahrers verläßt, liegt.

Hierzu erfaßt ein Lichtsensor verschiedene Bereiche eines Sichtfeldes des Fahrers und der Lichtpegel zur Ausleuchtung der eigenen Fahrbahn wird erhöht, wenn ein Schwellwert für die Lichtemissionen aus dem Bereich der Gegenfahrbahn überschritten wird.

Außerdem ist es vorteilhaft, wenn der Schwellwert für die Lichtemissionen aus dem Bereich der Gegenfahrbahn, ab dem die Ausleuchtung des Fahrbahnrandes erhöht wird, abhängig von einer Umgebungshelligkeit bestimmt wird. Hierbei sollte der Schwellwert mit steigender Umgebungshelligkeit ansteigen, damit das Erhöhen der Ausleuchtung des Fahrbahnrandes nur dann erfolgt, wenn die Lichtemissionen aus dem Bereich der Gegenfahrbahn um einen bestimmten Betrag bzw. Anteil oberhalb der Umgebungshelligkeit liegen, um so ein unnötiges Erhöhen der Ausleuchtung des Fahrbahnrandes zu vermeiden.

Auch kann es vorgesehen sein das Erhöhen der Ausleuchtung des Fahrbahnrandes nur innerhalb eines vorgegebenen Fahrgeschwindigkeits-Bereiches vorzunehmen. Die untere Grenze dieses Bereiches sollte so gewählt sein, daß sie für den Stadtverkehr charakteristisch ist; in Deutschland kann dieser Wert bei ca. 30 km/h liegen. Hiermit wird verhindert, daß innerhalb des (meist ohnehin beleuchteten) Stadtbereiches mit teilweise starkem Gegenverkehr, bei Stop-and-go Verkehr, bei stehendem Verkehr (z.B. vor einer Ampel) oder bei dichtem Auffahren durch Blinkleuchten, Rückleuchten oder Reflektionen am vorausfahrenden Fahrzeug eine häufige oder gar ständige zusätzliche Ausleuchtung ausgelöst wird.

Die obere Grenze dieses Bereiches sollte hingegen so gewählt werden, daß sie für Autobahnfahrt charakteristisch ist; dieser Wert könnte in Deutschland bei ca. 120 km/h liegen. Damit wird auf der Autobahn, auf der ja kein Gegenverkehr im direkten Sinne stattfinden kann, die Ausleuchtung des Fahrbahnrandes nicht unnötig erhöht. Die begrenzte Reichweite würde ohnehin keine wirkliche Hilfe bei höheren Geschwindigkeiten bieten.

Vorrichtungsgemäß wird weiter vorgeschlagen, daß zur Einstellung einer Lichtverteilung Scheinwerfer zu- oder abgeschaltet werden. Diese Einstellung der Lichtverteilung zeichnet sich durch einen besonders einfachen Aufbau und geringeren Steuerungsaufwand aus. Insbesondere wird vorgeschlagen, ein an sich bekanntes Abblendlicht zur Ausleuchtung der eigenen Fahrbahn und einen zusätzlichen Scheinwerfer zur Ausleuchtung des Fahrbahnrandes vorzusehen.

Schließlich wird vorrichtungsgemäß vorgeschlagen, den Lichtaustrittsbereich des zusätzlichen Scheinwerfers im Lichtaustrittsbereich eines bereits vorhandenen Scheinwerfers anzuordnen. Durch diese Maßnahme wird in vorteilhafter Weise beim Einschalten des zusätzlichen Scheinwerfers keine neue leuchtende Fläche geschaffen, die den Gegenverkehr ablenken oder gar irretieren könnte. Für einen solchen gemeinsamen Lichtaustrittsbereich kann beispielsweise
- der zusätzliche Scheinwerfer im Bereich des Abblendlichtes angeordnet oder
- mit einem Positionslicht (Standlicht) kombiniert werden.
Abblendlicht und zusätzlicher Scheinwerfer bzw. Postionslicht könnten hierzu beispielsweise in einem gemeinsamen Reflektor angeordnet sein. Es ist auch möglich, den zusätzlichen Scheinwerfer und das Abblendlicht unter einer gemeinsamen Deckscheibe anzuordnen und einen um die beiden Scheinwerfer herum gebildeten Raum mit Hilfe einer zusätzlichen Leuchte, wie z.B. dem Positionslicht, zusätzlich aufzuhellen, so daß trotz der getrennten Lichterzeugungssysteme die Anmutung eines einheitlichen Scheinwerfers erhalten bleibt.

Die Erfindung ist nachstehend anhand des in den Figuren dargestellten Ausführungsbeispieles näher erläutert. Es zeigen:
- Fig. 1: eine Übersichtsdarstellung einer Scheinwerferanordnung eines Fahrzeuges,
- Fig. 2: eine Darstellung eines Sichtfeldes eines Fahrers des Fahrzeuges ,
- Fig. 3: eine Lichtverteilung aus einer Vogelperspektive,
- Fig. 4: einen zeitlichen Verlauf eines durch einen Ein- und Ausschaltverzögerer erzeugten Ausgangssignales für den zweiten Scheinwerfer,
- Fig. 5: eine Anordnung der Scheinwerfer,
- Fig. 6: eine alternative Anordnung der Schweinwerfer zu Fig. 5,
- Fig. 7: eine weitere alternative Anordnung der Schweinwerfer zu Fig. 5,
- Fig. 8: eine schematische Darstellung einer Einrichtung zum Verschwenken des Scheinwerfers, und
- Fig. 9: eine Detaildarstellung von Gelenken nach Fig. 8.

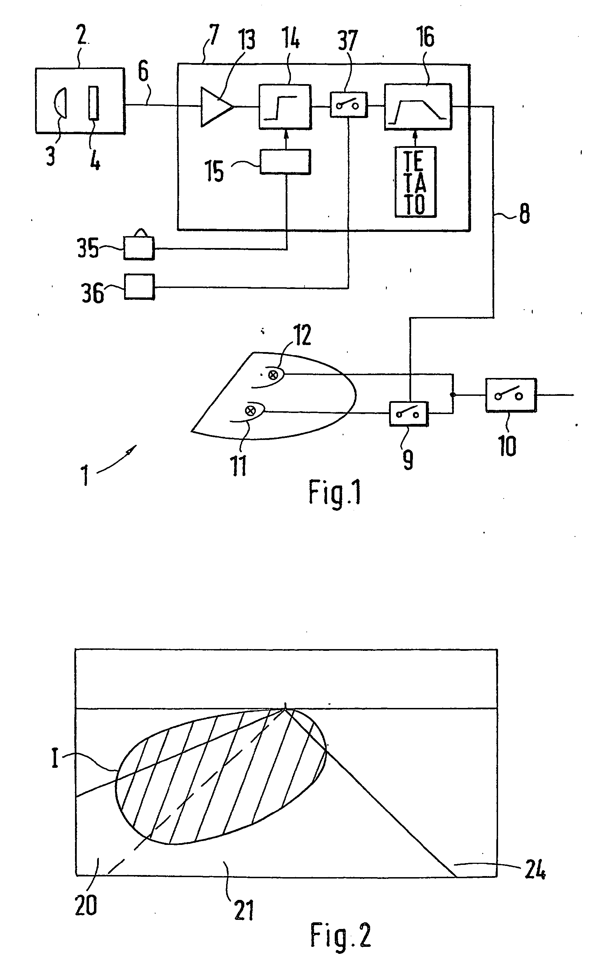

Die in Fig. 1 dargestellte Scheinwerferanordnung 1 eines nicht näher gezeigten Fahrzeuges umfaßt einen in Fahrtrichtung des Fahrzeuges angeordneten Lichtsensor 2, der Lichtimissionen in einem Sichtfeld des Fahrers erfaßt. Der Lichtsensor 2 besteht aus einer Abbildungsoptik 3 und einer in der Abbildungsebene angeordneten lichtempfindlichen Schicht 4. Über eine Signalleitung 6 gelangen die Ausgangssignale des Lichtsensors 2 in eine Steuereinrichtung 7. Ein Ausgangssignal 8 der Steuereinrichtung 7 wird auf eine Schalteinrichtung 9 gegeben, die auf einen ersten Scheinwerfer 11 einwirkt. Dabei ist der Scheinwerfer 11 ein Zusatzscheinwerfer zur Ausleuchtung eines (in Fig. 2 dargestellten) Fahrbahnrandes 24 vorgesehen, während ein von einem Lichtschalter 10 angesteuerter zweiter Scheinwerfer 12 ein an sich bekannter Abblendlicht-Scheinwerfer ist. Der Lichtschalter 10 wirkt auf beide Scheinwerfer 11,12. Anstelle eines Stellmotores 34 kann selbstverständlich auch ein Hubmagnet o.ä. vorgesehen sein.

Die Steuereinrichtung 7 kann eingangsseitig einen Verstärker 13 zur Aufbereitung des über die Signalleitung 6 eingehenden Signales aufweisen. Nachgeschaltet ist eine Vergleichseinrichtung 14, die das Ausgangssignal des Verstärkers 13 mit einem von einem Schwellwertgeber 15 gelieferten Signal vergleicht. Der Schwellwertgeber 15 ist hierbei mit einem Sensor 35 für die Umgebungshelligkeit verbunden, der ein Signal U liefert. Der Sensor 35 ist dabei nach oben gerichtet. Bereits innerhalb des Sensors 35 erfolgt eine gleitende Mittelwertbildung, um kurzfristige Einflüsse, wie sie z.B. von Straßenlampen erzeugt werden, auszugleichen. Der Schwellwertgeber paßt den an die Vergleichseinrichtung gelieferten Schwellwert an die Umgebungshelligkeit U in der Weise an, daß dieser Schwellwert mit steigender Umgebungshelligkeit U ebenfalls ansteigt. Ein der Vergleichseinrichtung 14 nachgeschalteter Ein- und Ausschaltverzögerer 16 mit voreingestellten Verzögerungszeiten TE für die Einschaltverzögerung, TA für die Ausschaltverzögerung und T0 für eine der Ausschaltverzögerung vorgeschaltete Totzeit erzeugt schließlich das kontinuierliche einstellbare (dimmbare) Ausgangssignal 8.

Die Weitergabe des Ausgangssignales 8 an die Schalteinrichtung 9 wird dabei von einem Schalter 37 gesteuert, der mit einem Geber 36 für eine Fahrgeschwindigkeit v verbunden ist. Das Ausgangssignal 8 wird im vorliegenden Beispiel nur dann weitergegeben, wenn die vom Geber 36 erfaßte Fahrgeschwindigkeit v innerhalb eines Bereiches zwischen 30 km/h und 120 km/h liegt. Es ist ebenfalls möglich, die gesamte Steuereinrichtung 7 nur innerhalb dieses Bereiches der Fahrgeschwindigkeit v zu aktivieren. Zusätzlich kann sichergestellt werden, daß ein Abschalten der Steuereinrichtung 7 oder der Weitergabe des Ausgangssignales 8 nur dann erfolgen kann, wenn das Ausgangssignal 8 den Wert Null aufweist. So kann der Zusatzscheinwerter 11 bei Verlassen des Fahrgeschwindigkeitsbereiches nicht im laufenden Betrieb abgeschaltet werden, sondern es wird nur das Einschalten des Zusatzscheinwerfers 11 unterdrückt, wenn der Fahrgeschwindigkeitsbereich verlassen worden ist.

Fig. 2 zeigt das von dem lichtempfindlichen Feld 4 aufgenommene Sichtfeld des Fahrers. Der gestrichelt dargestellte Bereich I steht für den Bereich einer Gegenfahrbahn 20. Der Bereich I ist so groß gewählt, daß entgegenkommende Fahrzeuge erfaßt werden. Es hat sich gezeigt, daß hierbei auch ein Abschnitt der eigenen Fahrbahn erfaßt werden sollte, um entgegenkommende Fahrzeuge auch auf kurviger Strecke erkennen zu können.

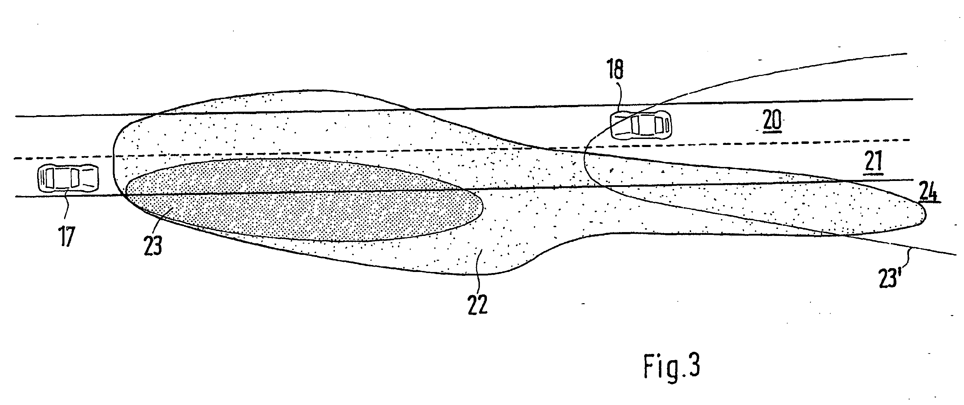

Fig. 3 zeigt die Lichtverteilung der Scheinwerfer 11, 12 aus einer Vogelperspektive. Das Fahrzeug 17 befindet sich auf seiner Richtungsfahrbahn 21, ein weiteres Fahrzeug 18 auf einer Gegenfahrbahn 20. Der Abblendlicht-Scheinwerfer 12 des eigenen Fahrzeuges 17 erzeugt den Lichtkegel 22, während der Zusatzscheinwerfer 11 in seiner Ausgangsposition den Lichtkegel 23 erzeugt. Durch den Stellmotor 34 kann der Zusatzscheinwerfer 11 in eine zweite Position 23' verschwenkt werden, in der er als Zusatz-Fernscheinwerfer, als Reichweitenunterstützung für das Abblendlicht (z.B. bei Autobahnfahrt) oder als Lichthupe (vorteilhaft z.B. in Verbindung mit einer Entladungslampe als erstem Scheinwerfer 11 zur Erzeugung von Abblendlicht und Fernlicht) verwendet werden kann.

Die Steuereinrichtung 7 vergleicht ständig das von dem lichtempfindlichen Feld für den Bereich I gelieferte Signal mit einem im Schwellwertgeber 15 für den Bereich I abgespeicherten Schwellwert, der mit Hilfe des Signales U ständig an die Umgebungshelligkeit angepaßt wird. Wird in der Vergleichseinrichtung 14 erkannt, daß im Bereich I, d.h. im Bereich der Gegenfahrbahn 20, die Lichtintensität den vom Schwellwertgeber 15 vorgegebenen Grenzwert überschreitet, so gibt die Steuereinrichtung 7 ein Ausgangssignal 8 ab, das die erste Schalteinrichtung 9 zum Zuschalten des Zusatzscheinwerfers 11 veranlaßt. Durch diese Maßnahme wird der Lichtkegel 22 durch den Lichtkegel 23 ergänzt und ein Fahrbahnrandbereich 24 (s. Fig. 2) verstärkt ausgeleuchtet.

Durch die - in dem von dem Lichtkegel 23 erfaßten Bereich - deutlich erhöhte Ausleuchtung wird der Blick des Fahrers automatisch von der Gegenfahrbahn 20 weg auf den nun heller erleuchteten Fahrbahnrand 24 gezogen. Damit wird eine von einem auf der Gegenfahrbahn 20 entgegenkommenden Fahrzeug 18 hervorgerufene Blendung vermindert, ohne daß die Blendung des entgegenkommenden Fahrzeuges 18 erhöht würde. Der Lichtkegel 23 ist hierzu so ausgerichtet, daß kein Streulicht in Richtung der Gegenfahrbahn 20 gelangt.

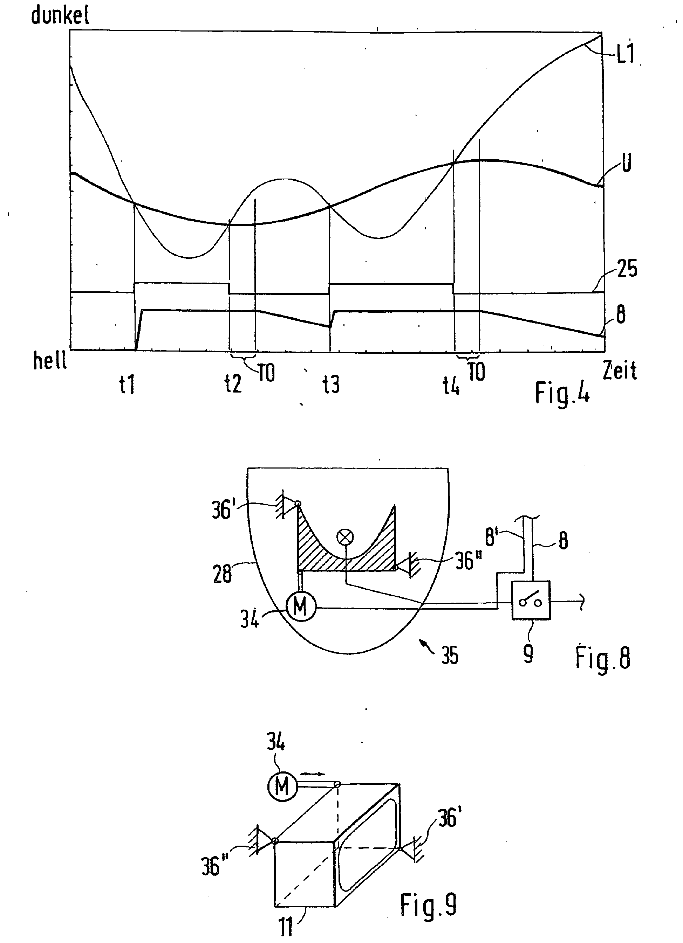

Fig. 4 zeigt den zeitlichen Verlauf des Ausgangssignales 8, des Signales U für die Umgebungshelligkeit sowie des Signales L1 für die Helligkeit im Bereich I. Zwischen den Zeitpunkten t1 und t2 sowie t3 und t4 befindet sich auf der Gegenfahrbahn 20 jeweils ein entgegenkommendes Fahrzeug 18, zu erkennen an den Signalpegeln des Signales L1. Zum ersten Zeitpunkt t1 ist ein erstes entgegenkommendes Fahrzeug 18 so nahe dem eigenen Fahrzeug 17, daß die Gefahr einer Blendung besteht. Zu diesem Zeitpunkt gibt der Vergleicher 14 ein Signal 25 an den Ein- und Ausschaltverzögerer 16 ab. Durch den Ein- und Ausschaltverzögerer 16 erreicht das Ausgangssignal 8 daraufhin nicht sofort den Wert 100 %, sondern erst nach einer voreingestellten Verzögerungszeit TE von 0,2 s. Zum Zeitpunkt t2 passiert das entgegenkommende Fahrzeug 18 das eigene Fahrzeug 17, so daß keine Gefahr einer Blendung mehr besteht. Zu diesem Zeitpunkt erlischt daher das Signal 25. Das Ausgangssignal 8 hingegen fällt nicht sofort auf 0 % ab, sondern wird zunächst über eine im Ein- und Ausschaltverzögerer 16 voreingestellte Totzeit T0 von 2 s gehalten und dann über eine ebenfalls voreingestellte Verzögerungszeit TA von hier 3 s langsam zurückgenommen.

Zum dritten Zeitpunkt t3 hat sich ein zweites Fahrzeug soweit genähert, daß wiederum die Gefahr einer Blendung besteht. Zu diesem Zeitpunkt t3 ist das Ausgangssignal 8 (und damit auch der Lichtstrom des Zusatzscheinwerfers 11) erst auf 70 % abgesunken und wird nun mit der für die Einschaltverzögerung voreingestellten Verzögerungszeit TE wieder auf 100 % angehoben. Zum vierten Zeitpunkt t4 passiert das zweite Fahrzeug das eigene Fahrzeug 17. Da sich im vorliegenden Beispiel kein weiteres Fahrzeug nähert, sinkt nun das Ausgangssignal 18 nach Ablauf der Totzeit T0 innerhalb der voreingestellten Verzögerungszeit TA auf 0 % ab, d.h. der Zusatzscheinwerfer 11 wird vollständig ausgeschaltet.

Der vom Schwellwertgeber 15 an den Vergleicher 14 gelieferte Schwellwert hängt hierbei von der vom Sensor 35 ermittelten (mittleren) Umgebungshelligkeit U ab. Der Schwellwert steigt dabei mit steigender Ungebungshelligkeit, so daß im Ergebnis die für den überwachten Bereich I ermittelte Helligkeit stets um einen bestimmten Betrag oder Anteil oberhalb der Umgebungshelligkeit liegen muß, um eine Zuschaltung des Zusatzscheinwerfers 11 auszulösen.

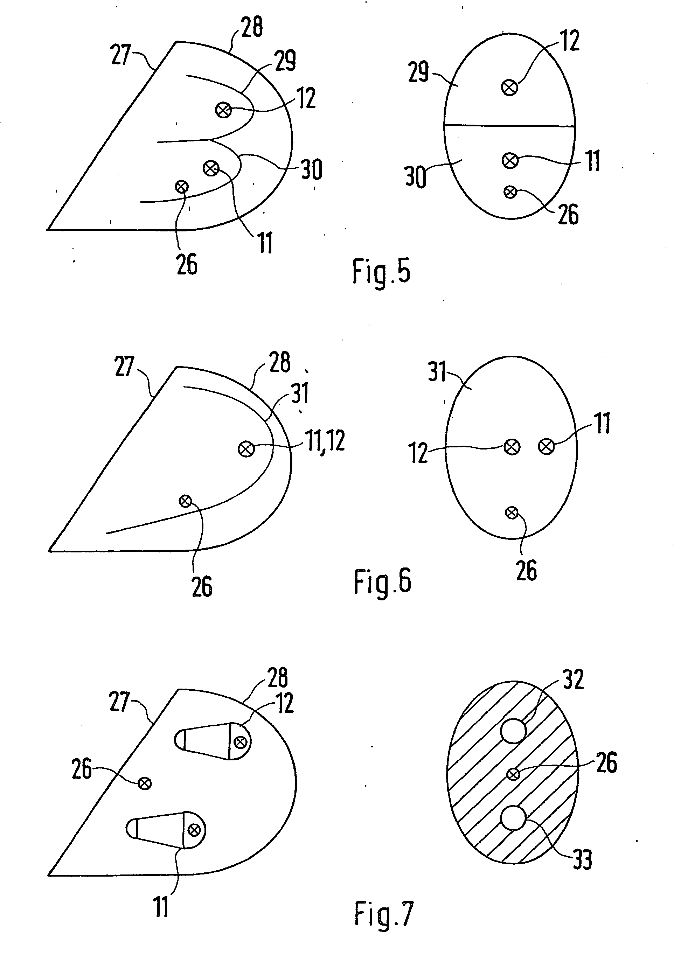

Mögliche Ausbildungen der Scheinwerfer 11, 12 sind in den Fig. 5 bis 7 dargestellt.

Zweckmäßigerweise können die Scheinwerfer 11, 12 unter einem gemeinsamen Deckglas 27 in einem gemeinsamen Gehäuse 28 angeordnet sein. Zusätzlich zu den Scheinwerfern 11, 12 ist ein Positionslicht 26 vorgesehen.

Im ersten Ausführungsbeispiel nach Fig. 5 ist für den zweiten Scheinwerfer 12 ein eigener Reflektor 29 vorgesehen, während ein weiterer Reflektor 30 sowohl vom Zusatzscheinwerfer 11 wie auch vom Positionslicht 26 genutzt wird.

Demgegenüber sind im zweiten Ausführungsbeispiel nach Fig. 6 beide Scheinwerfer 11, 12 in einem gemeinsamen Reflektor 31 angeordnet. Der Zusatzscheinwerfer 11 (genauer die Lichtquelle des Zusatzscheinwerfers 11) ist hierbei gegenüber der Lichtquelle für den Abblendlicht-Scheinwerfer 12 versetzt angeordnet, um so das gewünschte Lichtbündel 23 zu erzeugen. Die Positionsleuchte 26 kann ebenfalls im einzigen Reflektor 31 angeordnet werden.

Im dritten Ausführungsbeispiel nach Fig. 7 sind die Scheinwerfer 11, 12 als getrennte Projektionsscheinwerfer ausgeführt. Diese erzeugen auf der gemeinsamen Abdeckscheibe 27 getrennte Lichtdurchtrittsflächen 32, 33. Die Positionsleuchte 26 ist hierbei zwischen den Scheinwerfern 11 und 12 oder an anderer geeigneter Stelle innerhalb des Gehäuses 28 so angeordnet, daß das aus der Positionsleuchte 26 austretende Licht den außerhalb der Lichtdurchtrittsflächen 32, 33 liegenden, schraffiert dargestellten Bereich der gemeinsamen Abdeckscheibe 27 aufhellt. Alternativ kann zur Aufhellung auch Streulicht aus dem Abblendlicht-Scheinwerfer 12 verwendet werden; die Positionsleuchte 26 kann in diesem Fall an anderer Stelle angeordnet werden.

In den Ausführungsbeispielen nach Fig. 5 bis 7 ist wesentlich, daß der Zusatzscheinwerfer 11 stets in Verbindung mit einem weiteren Scheinwerfer, hier dem Abblendlicht-Scheinwerfer 12 oder der Positionleuchte 26, so angeordnet ist, daß sich gemeinsame Lichtaustrittsflächen ergeben. So weisen im Ausführungsbeispiel nach Fig. 5 der Zusatzscheinwerfer 11 sowie die Positionsleuchte 26, im zweiten Ausführungsbeispiel nach Fig. 6 der Zusatzscheinwerfer 11 und der Abblendlicht-Scheinwerfer 12 und im dritten Ausführungsbeispiel nach Fig. 7 der Zusatzscheinwerfer 11 (bzw. dessen Lichtdurchtrittsfläche 33) und die Positionsleuchte 26 jeweils einen gemeinsamen Lichtaustrittsbereich auf.

Fig. 8 zeigt schematisch eine Einrichtung 35 zum Verschwenken des Zusatzscheinwerfers 11. Wie schon in Fig. 1 gezeigt ist der Zusatzscheinwerfer 11 beleuchtungstechnisch über die Schalteinrichtung 9 und den Ausgang 8 des (hier nicht gezeigten) Steuergerätes 7 angesteuert, während der Stellmotor 34 mit einem Ausgang 8' des Steuergerätes 7 verbunden ist. Der Zusatzscheinwerfer 11 ist im Scheinwerfergehäuse 28 mit Hilfe zweier Gelenke 36' und 36'' schwenkbar gelagert und kann über den Schwenkmotor 34 verschwenkt werden, der hierzu mit dem Zusatzscheinwerfer 11 verbunden ist. Der Schwenkbereich beträgt nur wenige Grad. In seiner dargestellten Ausgangsposition erzeugt der Zusatzscheinwerfer 11 den Lichtkegel 23 (vgl. Fig. 3), während er in seiner zweiten Position, in die er durch den Stellmotor 34 verschwenkt wird, den Lichtkegel 23' erzeugt.

In Fig. 9 ist die Anordnung der Gelenke 36' und 36'' schematisch dargestellt, die so gewählt ist, daß sich eine diagonal liegende Schwenkachse ergibt, deren Lage so gewählt ist, daß der Zusatzscheinwerfer 11 zwischen seiner Ausgangsposition und seiner zweiten Position verschwenkt werden kann. Der Angriffspunkt des Stellmotores 34 muß hierbei lediglich so gewählt werden, das eine Kraftangriffsachse des Stellmotores 34 nicht die Schwenkachse schneidet.

Die Steuereinrichtung 7 wird den Stellmotor 34 dann ansteuern (und damit den Zusatzscheinwerfer 11 in seine zweite Position verschwenken), wenn beispielsweise der Fahrer die Lichthupe betätigt oder wenn das Fernlicht einschaltet. Wenn das Steuergerät 7 Autobahnfahrt erkennt, kann der Zusatzscheinwerfer 11 bei entsprechender Auslegung des Ausleuchtung (dies ist eine harte Hell-Dunkel-Grenze in Verbindung mit einer Neigung von ca. - 0,2%) auch als Reichweitenunterstützung für das Abblendlicht eingeschaltet werden. Als Ausgangsposition ist die Ausleuchtung des Fahrbahnrandbereiches 24 gewählt, damit bei einem Ausfall des Stellmotores 34 entgegenkommende Fahrzeuge 18 nicht durch den in der zweiten Position befindlichen Zusatzscheinwerfer 11 geblendet werden.

## Patentansprüche

1. Verfahren zur Steuerung der Lichtverteilung einer Scheinwerferanordnung (1) eines Fahrzeuges (17); mit
- wenigstens einen ersten Lichtsensor (1), der die auf einen Fahrer des Fahrzeuges aus einem Bereich (I) einer Gegenfahrbahn (20) einwirkenden Lichtimissionen erfaßt,
- einer Vergleichseinrichtung (14), die die Intensität der Lichtimissionen für jeden Bereich mit einem Schwellwert vergleicht und
- einer Steuereinrichtung (7) für die Lichtverteilung der Scheinwerferanordnung abhängig von einem Signal der Vergleichseinrichtung,
- wobei die Steuereinrichtung (7) bei Überschreiten des Schwellwertes in einem eine Gegenfahrbahn erfassenden Bereich (I) die Lichtverteilung so einstellt, daß die Ausleuchtung eines Fahrbahnrandes (24) einer eigenen Fahrbahnseite erhöht wird, wobei
für die Lichtverteilung im Sinne eines Erhöhens der Ausleuchtung des Fahrbahnrandes (24) der eigenen Fahrbahnseite eine Ausschaltverzögerung (16) vorgesehen ist, **dadurch gekennzeichnet, dass** die Ausschaltverzögerung die im Bereich des eigenen Fahrbahnrandes erhöhte Lichtstärke nicht schlagartig, sondern allmählich zurücknimmt.

2. Verfahren nach Anspruch 1, **dadurch gekennzeichnet, daß** die Ausschaltverzögerung (16) eine Verzögerungszeit (TA) im wesentlichen in einem Bereich von 1 bis 10 s aufweist.

3. Verfahren nach Anspruch 1 oder 2, **dadurch gekennzeichnet, daß** für die Lichtverteilung im Sinne eines Erhöhens der Ausleuchtung des Fahrbahnrandes (24) der eigenen Fahrbahnseite eine Einschaltverzögerung (16) mit einer Verzögerungszeit (TE) im wesentlichen in einem Bereich von 0 bis etwa 2 s vorgesehen ist.

4. Verfahren nach einem der Ansprüche 1 bis 3, **dadurch gekennzeichnet, daß** vor der Ausschaltverzögerung (16) eine Totzeit (T0) im Bereich von 0 bis etwa 3 s vorgesehen ist.

5. Verfahren nach einem der Ansprüche 1 bis 4, **dadurch gekennzeichnet, daß** der Schwellwert abhängig von einem Wert (U) einer Umgebungshelligkeit bestimmt wird, wobei der Schwellwert mit steigendem Wert der Umgebungshelligkeit ansteigt und der Wert der Umgebungshelligkeit als zeitlicher Mittelwert gebildet ist..

6. Verfahren nach einem der Ansprüche 1 bis 5, **dadurch gekennzeichnet, daß** das Erhöhen der Ausleuchtung des Fahrbahnrandes (24) nur innerhalb eines vorgegebenen Bereiches einer Fahrgeschwindigkeit (v) erfolgt, wobei die untere Grenze des Bereiches im wesentlichen für den Stadtverkehr und die obere Grenze im wesentlichen für den Autobahnverkehr charakteristisch ist.

7. Vorrichtung zur Steuerung der Lichtverteilung einer Scheinwerferanordnung (1) eines Fahrzeuges (17), mit
- wenigstens einem ersten Lichtsensor (1), der die auf einen Fahrer des Fahrzeuges aus dem Sichtfeld in Fahrtrichtung einwirkenden Lichtimissionen für verschiedenen Bereiche (I,II,III) des Sichtfeldes erfaßt,
- einer Vergleichseinrichtung (14), die die Intensität der Lichtimissionen für jeden Bereich mit einem Schwellwert vergleicht und
- einer Steuereinrichtung (7) die Lichtverteilung der Scheinwerferanordnung so einstellt, daß die Ausleuchtung eines Fahrbahnrandes (24) einer eigenen Fahrbahnseite erhöht wird, wenn die Vergleichseinrichtung in einem eine Gegenfahrbahn erfassenden Bereich (I) ein Überschreiten des Schwellwertes feststellt,
**dadurch gekennzeichnet, daß**
die Steuereinrichtung (7) eine Ausschaltverzögerungseinrichtung (16) aufweist, welche die erhöhte Lichtstärke allmählich und nicht schlagartig zurücknimmt.

8. Vorrichtung nach Anspruch 7, **dadurch gekennzeichnet, daß** die Ausschaltverzögerungseinrichtung (16) eine Verzögerungszeit (TA) im wesentlichen in einem Bereich von 1 bis 10 s aufweist.

9. Vorrichtung nach Anspruch 7 oder 8, **dadurch gekennzeichnet, daß** die Steuereinrichtung (7) eine Einschaltverzögerungseinrichtung (16) mit einer Verzögerungszeit (TE) im wesentlichen in einem Bereich von 0 bis etwa 2 s aufweist.

10. Vorrichtung nach Anspruch 7, 8 oder 9, **dadurch gekennzeichnet, daß** vor der Ausschaltverzögerung (16) eine Totzeit (T0) im Bereich von 0 bis etwa 3 s vorgesehen ist.

11. Verfahren nach einem der Ansprüche 1 bis 4, **dadurch gekennzeichnet, daß** der Schwellwert von einem Schwellwertgeber (15) geliefert wird, der seinerseits mit einem Geber (35) für eine Umgebungshelligkeit (U) verbunden ist, wobei der Schwellwertgeber den Schwellwert so bestimmt, daß der Schwellwert mit steigender Umgebungshelligkeit ansteigt, und daß im Schwellwertgeber ein zeitlicher Mittelwert der Umgebungshelligkeit gebildet wird.

12. Vorrichtung nach einem der Ansprüche 7 bis 11, **dadurch gekennzeichnet, daß** ein Geber (36) für eine Fahrgeschwindigkeit (v) vorgesehen ist, und die Steuereinrichtung (7) nur dann aktiviert ist, wenn die Fahrgeschwindigkeit innerhalb eines vorgegebenen Bereiches liegt, wobei die untere Grenze des Bereiches im wesentlichen für den Stadtverkehr und die obere Grenze im wesentlichen für den Autobahnverkehr charakteristisch ist.

13. Vorrichtung nach einem der Ansprüche 7 bis 12, **dadurch gekennzeichnet, daß** die Steuereinrichtung (7) zur Einstellung einer Lichtverteilung Scheinwerfer (11) zu- oder abschaltet.

14. Vorrichtung nach Anspruch 13, **dadurch gekennzeichnet, daß** die Steuereinrichtung (7) zur Ausleuchtung des Fahrbahnrandes (24) einen zusätzlichen Scheinwerfer (11) zuschaltet.

15. Vorrichtung nach Anspruch 14, **dadurch gekennzeichnet, daß** der zusätzliche Scheinwerfer (11) einen gemeinsamen Lichtaustrittsbereich mit wenigstens einem anderen Scheinwerfer (12,26) aufweist.

16. Vorrichtung nach Anspruch 15, **dadurch gekennzeichnet, daß** der zusätzliche Scheinwerfer (11) mit einem Positionslicht (26) kombiniert ist.

17. Vorrichtung nach Anspruch 15, **dadurch gekennzeichnet, daß** der zusätzliche Scheinwerfer (11) mit einem Abblendlicht (12) kombiniert ist.

18. Vorrichtung nach einem der Ansprüche 15 bis 17, **dadurch gekennzeichnet, daß** der zusätzliche Scheinwerfer (11) und der andere Scheinwerfer (12,26) einen gemeinsamen Reflektor (31) aufweisen.

19. Vorrichtung nach einem der Ansprüche 15 bis 17, **dadurch gekennzeichnet, daß** der zusätzliche Scheinwerfer (11) und der andere Scheinwerfer (12,26) eine gemeinsame Deckscheibe (27) aufweisen.

20. Vorrichtung nach Anspruch 17 oder 19, **dadurch gekennzeichnet, daß** der zusätzliche Scheinwerfer (11) und der Abblendlicht-Scheinwerfer (12) unter einer gemeinsamen Deckscheibe (27) angeordnet sind, wobei für das Zusatzlicht und das Abblendlicht jeweils separate Lichtduchtrittsbereiche (32,33) vorgesehen sind, und der verbleibende Bereich der Deckscheibe zusätzlich aufgehellt ist.

## Claims

1. Method for controlling the light distribution of a headlamp arrangement (1) of a vehicle (17), having
- at least one first light sensor (1) which senses the light emissions acting on a driver of the vehicle from a region (I) of an opposite lane (20),
- a comparison device (14) which compares the intensity of the light emissions for each region with a threshold value, and
- a control device (7) for distributing the light of the headlamp arrangement as a function of a signal of the comparison device,
- the control device (7) setting the light distribution upon overshooting of the threshold value in a region (I) covering an opposite lane such that the illumination of a lane edge (24) of the vehicle's own lane side is increased, in which case
a switch off delay (16) is provided for the light distribution for the purpose of increasing the illumination of the lane edge (24) of the vehicle's own lane side, **characterized in that** the switch off delay does not cancel the light intensity increased in the region of the vehicle's own lane side abruptly, but does so gradually.

2. Method according to Claim 1, **characterized in that** the switch off delay (16) has a delay time (TA) substantially in a range from 1 up to 10 s.

3. Method according to Claim 1 or 2, **characterized in that** a switch on delay (16) with a delay time (TE) substantially in a range from 0 up to approximately 2 s is provided for the light distribution for the purpose of increasing the illumination of the lane edge (24) of the vehicle's own lane side.

4. Method according to one of Claims 1 to 3, **characterized in that** a dead time (TO) in a range of 0 up to approximately 3 s is provided upstream of the switch off delay (16).

5. Method according to one of Claims 1 to 4, **characterized in that** the threshold value is determined as a function of a value (U) of an ambient brightness, the threshold value rising with rising value of the ambient brightness, and the value of the ambient brightness being formed as a time average.

6. Method according to one of Claims 1 to 5, **characterized in that** the increase in illumination of the lane edge (24) takes place only within a prescribed range of a driving speed (v), the lower limit of the range being substantially characteristic of road traffic, and the upper limit being substantially characteristic of motorway traffic.

7. Device for controlling the light distribution of a headlamp arrangement (1) of a vehicle (17), having
- at least one first light sensor (1) which senses the light emissions, acting on a driver of the vehicle from the field of view in the driving direction, for various regions (I, II, III) of the field of view,
- a comparison device (14) which compares the intensity of the light emissions for each region with a threshold value, and
- a control device (7) which sets the light distribution of the headlamp arrangement such that the illumination of a lane edge (24) of the vehicle's own lane side is increased when the comparison device determines overshooting of the threshold value in a region (I) covering an opposite lane,
**characterized in that** the control device (7) has a switch off delay device (16) which cancels the increased light intensity gradually, and does not do so abruptly.

8. Device according to Claim 7, **characterized in that** the switch off delay device (16) has a delay time (TA) substantially in a range from 1 up to 10 s.

9. Device according to Claim 7 or 8, **characterized in that** the control device (7) has a switch on delay device (16) with a delay time (TE) substantially in a range from 0 up to approximately 2 s.

10. Device according to Claim 7, 8 or 9, **characterized in that** a dead time (TO) in a range of 0 up to approximately 3 s is provided upstream of the switch off delay (16).

11. Method according to one of Claims 1 to 4, **characterized in that** the threshold value is supplied by a threshold value transmitter (15) which, for its part, is connected to a transmitter (35) for an ambient brightness (U), the threshold value transmitter determining the threshold value such that the threshold value rises with rising ambient brightness, and **in that** a time average of the ambient brightness is formed in the threshold value transmitter.

12. Device according to one of Claims 7 to 11, **characterized in that** a transmitter (36) is provided for a driving speed (v), and the control device (7) is activated only when the driving speed lies within a prescribed range, the lower limit of the range being substantially characteristic of town traffic, and the upper limit being substantially characteristic of motorway traffic.

13. Device according to one of Claims 7 to 12, **characterized in that** the control device (7) switches on or switches off headlamps (11) in order to set a light distribution.

14. Device according to Claim 13, **characterized in that** the control device (7) switches on an additional headlamp (11) in order to illuminate the lane edge (24).

15. Device according to Claim 14, **characterized in that** the additional headlamp (11) has a common light exit region with at least one other headlamp (12, 26).

16. Device according to Claim 15, **characterized in that** the additional headlamp (11) is combined with a position light (26).

17. Device according to Claim 15, **characterized in that** the additional headlamp (11) is combined with a dipped beam (12).

18. Device according to one of Claims 15 to 17, **characterized in that** the additional headlamp (11) and the other headlamp (12, 26) have a common reflector (31).

19. Device according to one of Claims 15 to 17, **characterized in that** the additional headlamp (11) and the other headlamp (12, 26) have a common cover lens (27).

20. Device according to Claim 17 or 19, **characterized in that** the additional headlamp (11) and the dipped beam headlamp (12) are arranged under a common cover lens (27), separate light passage areas (32, 33) being provided in each case for the additional light and the dipped beam, and the remaining region of the cover lens additionally being brightened.

## Revendications

1. Procédé pour commander la distribution de la lumière d'un arrangement de phare (1) d'un véhicule (17), comprenant
- au moins un premier détecteur de lumière (1) qui détecte les nuisances lumineuses qui agissent sur un conducteur du véhicule depuis la zone (I) d'une voie en sens inverse (20),
- un dispositif comparateur (14) qui compare l'intensité des nuisances lumineuses pour chaque zone avec une valeur de seuil et
- un dispositif de commande (7) de la distribution de lumière de l'arrangement de phare en fonction d'un signal du dispositif comparateur,
- le dispositif de commande (7), en cas de dépassement de la valeur de seuil dans une zone (I) englobant une voie en sens inverse, réglant la distribution de la lumière de telle sorte que l'éclairage d'un bord de voie de circulation (24) du côté emprunté de la voie de circulation soit accru,
un retard d'extinction (16) étant prévu pour la distribution de la lumière dans le sens d'un accroissement de l'éclairage du bord de voie de circulation (24) du côté emprunté de la voie de circulation, **caractérisé en ce que** le retard d'extinction diminue l'intensité lumineuse accrue dans la zone du bord emprunté de la voie de circulation non pas brutalement, mais graduellement.

2. Procédé selon la revendication 1, **caractérisé en ce que** le retard d'extinction (16) présente un temps de retard (TA) pour l'essentiel compris dans une plage de 1 à 10 s.

3. Procédé selon la revendication 1 ou 2, **caractérisé en ce qu'**un retard d'allumage (16) ayant un temps de retard (TE) pour l'essentiel compris dans une plage de 0 à environ 2 s est prévu pour la distribution de la lumière dans le sens d'un accroissement de l'éclairage du bord de voie de circulation (24) du côté emprunté de la voie de circulation.

4. Procédé selon l'une des revendications 1 à 3, **caractérisé en ce qu'**un temps mort (TO) compris dans une plage de 0 à environ 3 s est prévu avant le retard d'extinction (16).

5. Procédé selon l'une des revendications 1 à 4, **caractérisé en ce que** la valeur de seuil est déterminée en fonction d'une valeur (U) d'une luminosité ambiante, la valeur de seuil augmentant lorsque la valeur de la luminosité ambiante croît et la valeur de la luminosité ambiante étant déterminée sous la forme d'une valeur moyenne dans le temps.

6. Procédé selon l'une des revendications 1 à 5, **caractérisé en ce que** l'accroissement de l'éclairage du bord de voie de circulation (24) ne s'effectue qu'au sein d'une plage pouvant être prédéterminée d'une vitesse de déplacement (v), la limite inférieure de la plage étant pour l'essentiel caractéristique de la circulation urbaine et la limite supérieure pour l'essentiel de la circulation sur autoroute.

7. Dispositif pour commander la distribution de la lumière d'un arrangement de phare (1) d'un véhicule (17), comprenant
- au moins un premier détecteur de lumière (1) qui détecte les nuisances lumineuses qui agissent sur un conducteur du véhicule pour différentes zones (I, II, III) du champ de vision depuis le champ de vision dans le sens du déplacement,
- un dispositif comparateur (14) qui compare l'intensité des nuisances lumineuses pour chaque zone avec une valeur de seuil et
- un dispositif de commande (7) qui règle la distribution de lumière de l'arrangement de phare de telle sorte que l'éclairage d'un bord de voie de circulation (24) du côté emprunté de la voie de circulation soit accru lorsque le dispositif comparateur détermine un dépassement de la valeur de seuil dans une zone (I) qui englobe une voie de circulation en sens inverse,
**caractérisé en ce que** le dispositif de commande (7) présente un dispositif de retard d'extinction (16) qui diminue l'intensité lumineuse accrue graduellement et non pas brutalement.

8. Dispositif selon la revendication 7, **caractérisé en ce que** le dispositif de retard d'extinction (16) présente un temps de retard (TA) pour l'essentiel compris dans une plage de 1 à 10 s.

9. Dispositif selon la revendication 7 ou 8, **caractérisé en ce que** le dispositif de commande (7) présente un dispositif de retard d'allumage (16) ayant un temps de retard (TE) pour l'essentiel compris dans une plage de 0 à environ 2 s.

10. Dispositif selon la revendication 7, 8 ou 9, **caractérisé en ce qu'**un temps mort (TO) compris dans une plage de 0 à environ 3 s est prévu avant le retard d'extinction (16).

11. Procédé selon l'une des revendications 1 à 4, **caractérisé en ce que** la valeur de seuil est délivrée par un générateur de valeur de seuil (15) qui est de son côté relié à un capteur (35) de luminosité ambiante (U), le générateur de valeur de seuil déterminant la valeur de seuil de telle sorte que la valeur de seuil augmente lorsque la luminosité ambiante croît et qu'une valeur moyenne dans le temps de la luminosité ambiante est déterminée dans le générateur de valeur de seuil.

12. Dispositif selon l'une des revendications 7 à 11, **caractérisé en ce qu'**il est prévu un capteur (36) pour une vitesse de déplacement (v) et le dispositif de commande (7) n'est activé que lorsque la vitesse de déplacement se trouve au sein d'une plage prédéterminée, la limite inférieure de la plage étant pour l'essentiel caractéristique de la circulation urbaine et la limite supérieure pour l'essentiel de la circulation sur autoroute.

13. Dispositif selon l'une des revendications 7 à 12, **caractérisé en ce que** le dispositif de commande (7) met en circuit ou éteint le phare (11) pour régler la distribution de la lumière.

14. Dispositif selon la revendication 13, **caractérisé en ce que** le dispositif de commande (7) met en circuit un phare supplémentaire (11) pour éclairer le bord de la voie de circulation (24).

15. Dispositif selon la revendication 14, **caractérisé en ce que** le phare supplémentaire (11) présente une zone sortie de lumière commune avec au moins un autre phare (12, 26).

16. Dispositif selon la revendication 15, **caractérisé en ce que** le phare supplémentaire (11) est combiné avec un feu de position (26).

17. Dispositif selon la revendication 15, **caractérisé en ce que** le phare supplémentaire (11) est combiné avec un feu de croisement (12).

18. Dispositif selon l'une des revendications 15 à 17, **caractérisé en ce que** le phare supplémentaire (11) et l'autre phare (12, 26) présentent un réflecteur commun (31).

19. Dispositif selon l'une des revendications 15 à 17, **caractérisé en ce que** le phare supplémentaire (11) et l'autre phare (12, 26) présentent une vitre protectrice commune (27).

20. Dispositif selon l'une des revendications 17 ou 19, **caractérisé en ce que** le phare supplémentaire (11) et le feu de croisement (12) sont disposés sous une vitre protectrice commune (27), des zones de passage (32, 33) séparées respectives étant prévues pour la lumière supplémentaire et la lumière du feu de croisement et la zone restante de la vitre protectrice étant en plus éclaircie.
